# EUROPEAN PATENT SPECIFICATION

(11) **EP 0 890 760 B1**
(45) Date of publication and mention of the grant of the patent: **10.01.2001**
(21) Application number: 98112655.0
(22) Date of filing: 08.07.1998
(51) Int. Cl.: F16H 35/10, F16D 7/02

(54) **Power transmission mechanism having an elastic ring member compressed between an outer ring and an inner boss**
Leistungsgetriebe mit komprimiertem, elastischem Ringelement zwischen äusserem Ring und innerer Nabe
Transmission de puissance avec anneau élastique comprimé entre anneau extérieur et moyeu

(30) Priority: 11.07.1997 JP 18641597
(43) Date of publication of application: 13.01.1999
(73) Proprietor: Sanden Corporation, Isesaki-shi, Gunma 372-8502 (JP)
(72) Inventor: Koitabashi, Takatoshi, Isesaki-shi, Gunma, 372/8502 (JP)
(74) Representative: Prüfer, Lutz H., Dipl.-Phys.

(56) References cited:
- EP-A- 0 702 167
- EP-A- 0 740 077
- FR-A- 965 155
- US-A- 5 377 962

## Description

### Background of the Invention:

The present invention relates to a power transmission mechanism having a torque limiter function, which can be widely used in the fields of compressors and other general industrial devices.

There have been proposed various power transmission mechanisms of this type. As an example, a conventional power transmission mechanism is described in JP-A-8-135752. The conventional power transmission mechanism is used in a compressor and is for transmitting a power from a driving member or a pulley to a driven member or a shaft of the compressor.

The conventional power transmission mechanism comprises a first retaining member of a ring shape fixed to the driving member, a second retaining member of the ring shape placed concentric with the first retaining member and fixed to the driven member, and an elastic ring member inserted between the first and the second retaining members. Each of the first and the second retaining members has a plurality of convex portions and concave portions. On the other hand, the elastic ring member has a plurality of convex portions and concave portions which are engaged with the convex portions and the concave portions of each of the first and the second retaining members in a rotation direction to transmit the power from the driving member the driven member.

Upon generation of the torque exceeding a set value due to seizure of the compressor or the like, the elastic ring member is deformed to reduce its thickness in radial directions thereof. As a result, the elastic ring member causes slips relative to the concave portions and convex portions of the second retaining member so that the transmission of the torque is precluded.

In the conventional power transmission mechanism, even if the elastic ring once slips to cause its convex and concave portions to escape from the concave and convex portions of the second retaining member, it is likely that they are caught in the adjacent concave and convex portions of the second retaining member to again transmit the torque.

Further, for the elastic ring to reduce the radial thickness thereof in response to a small pressing force, the hardness of the elastic ring needs to be lessened. On the other hand, for the convex and concave portions of the elastic ring to endure the local repetitive compression, the hardness thereof needs to be enlarged. Thus, if the durability is given priority, that is, if the hardness is increased, the transmission shut-off torque is rendered increased so that the reliability as a protective function is lowered.

Further, upon assembling the elastic ring and the first and second retaining members, it is necessary to precisely match the concave and convex portions so that positioning thereof is complicated.

US 5,377,962 discloses the power transmission mechanism according to the preamble of claim 1. EP 0 740 077 A2 discloses a power transmission mechanism for transmitting a power between a driving member and a driven member, comprising an outer ring fixed to the driven member and having an inner circular surface, an inner ring fixed to the driving member and having an outer circular surface which is opposite to the inner circular surface in a radial direction of the outer ring to form a ring-shaped space therebetween, and an elastic member placed in the ring-shaped space.

It is object of the present invention to provide a power transmission mechanism in which a torque transmission can be reliably shut off on exceeding a set value.

The object is solved by the power transmission mechanism of claim 1.

Further developments of the invention are given in the subclaims.

The power transmission mechanism comprises an improved durability. Further, in the power transmission mechanism the generation of noise and vibration can be prevented upon the shut-off of the torque transmission.

Furthermore, in the power transmission mechanism the number of parts is reduced so that assembling is simplified and can be readily carried out.

Further features and advantages of the present invention are comprehensible from the following description of embodiments of the invention in connection with the Figs., of which:
Figs. 1A and 1B show the main portion of a compressor having a conventional power transmission mechanism, wherein Fig. 1A is a front view, Fig. 1B being a sectional view taken along line A-O-A in Fig. 1A;
Figs. 2A and 2B show the main portion of a compressor having a power transmission mechanism according to a first preferred embodiment of the present invention, wherein Fig. 2A is a front view, Fig. 2B being a sectional view;
Fig. 3 is a perspective view of the power transmission mechanism illustrated in Figs. 2A and 2B;
Fig. 4 is a perspective view showing a press-fitting process of the power transmission mechanism illustrated in Figs. 2A and 2B;
Fig. 5 is a graph showing a relationship between contraction or fitting margin and transmission shut-off torque in the power transmission mechanism illustrated in Figs. 2A and 2B;
Figs. 6A and 6B show the main portion of a compressor having a power transmission mechanism according to a second preferred embodiment of the present invention, wherein Fig. 6A is a front view, Fig. 6B being a sectional view;
Fig. 7 is a partial development view of an outer ring included in a power transmission mechanism according to third preferred embodiment of the present invention; and
Fig. 8 is an exploded perspective view of a power transmission mechanism according to a fourth preferred embodiment of the present invention.

### Description of the Preferred Embodiment:

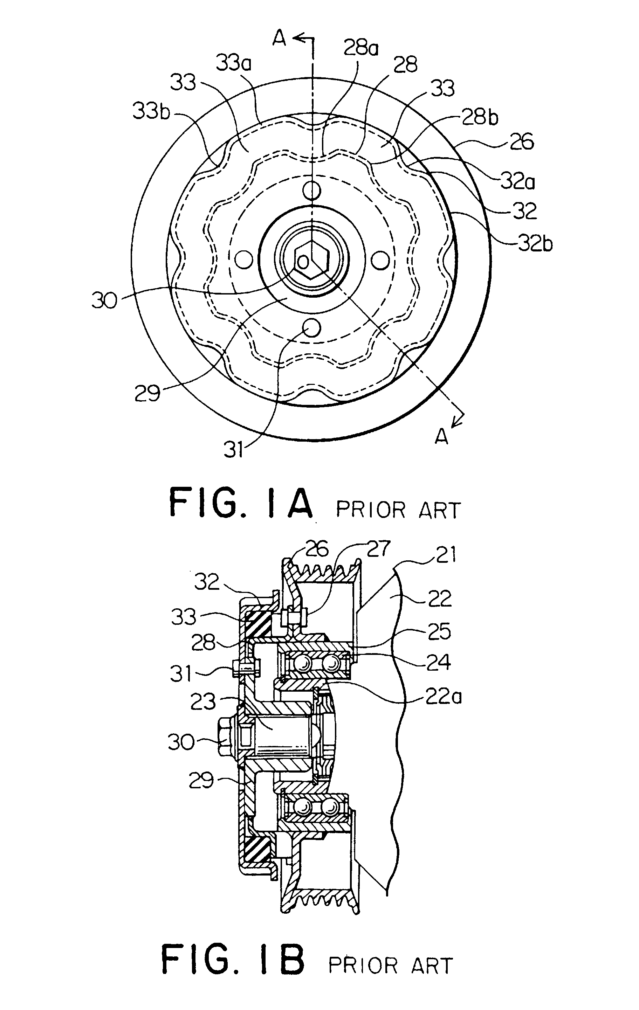

Referring to Figs. 1A and 1B, the conventional power transmission mechanism will be described for a better understanding of the present invention. The conventional power transmission mechanism corresponds to that is described in JP-A-8-135752. An inner ring of a bearing 24 is fixed to a tubular projection 22A of a front housing 22 of a compressor 21, and a rotor 25 is fixed to an outer ring of the bearing 24. A pulley 26 is fixed to the rotor 25, and a first retaining member 28 is fixed to the pulley 26 by rivets 27. A hub 29 is fixed to a shaft 23 of the compressor 21 by means of a nut 30, and a second retaining member 32 is fixed to the hub 29 by rivets 31. An elastic ring member 33 is inserted between the first retaining member 28 and the second retaining member 32.

The elastic ring member 33 has a petal shape and is formed at its inner and outer circumferences with a plurality of convex portions 33a and concave portions 33b. The first retaining member 28 is formed at its outer circumference with a plurality of concave portions 28a and convex portions 28b corresponding to the plurality of convex portions 33a and concave portions 33b of the elastic ring member 33, respectively. Further, the second retaining member 32 is formed at its inner circumference with a plurality of concave portions 32a and convex portions 32b corresponding to the plurality of convex portions 33a and concave portions 33b of the elastic ring member 33, respectively.

During a normal operation, the plurality of convex portions 33a and concave portions 33b of the elastic ring 33 are subjected to compressive deformation between the plurality of concave portions 28a and convex portions 28b of the first retaining member 28 and the plurality of concave portions 32a and convex portions 32b of the second retaining member 32 so that the torque is transmitted from the pulley 26 to the shaft 23 of the compressor 21 due to the reaction of the elastic ring member 33. Upon generation of the torque exceeding a set value due to seizure of the compressor 21 or the like, the elastic ring member 33 is deformed to reduce its thickness in radial directions thereof. As a result, the elastic ring member 33 causes slips relative to the concave portions 32a and convex portions 32b of the second retaining member 32 so that the transmission of the torque is precluded.

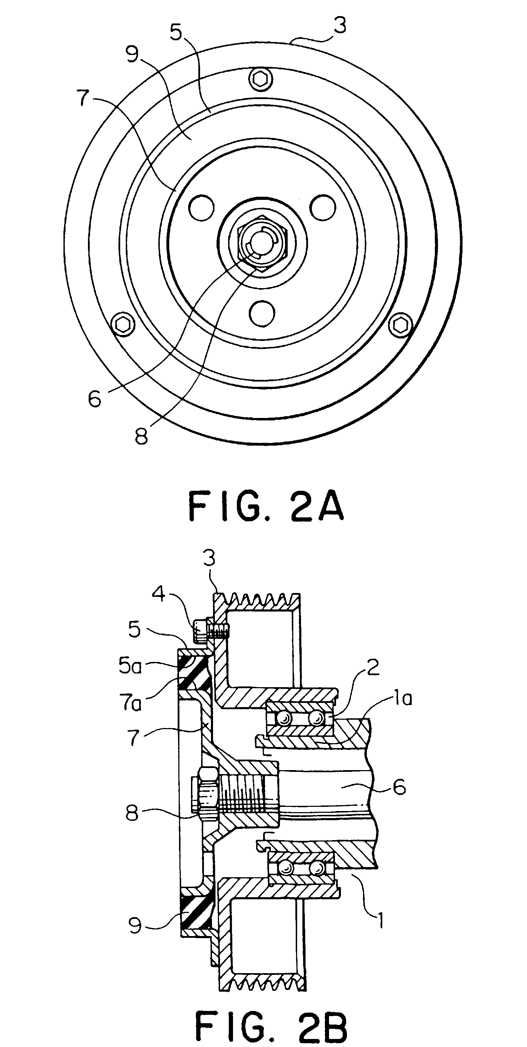

Referring now to Figs. 1A, 1B, and 2, description is made as regards a power transmission mechanism according to a first preferred embodiment of the present invention. The power transmission mechanism is used in a compressor having a front housing 1 and a shaft 6. In the manner known in the art, the compressor carries out compressing operation as regards a gaseous fluid when the shaft 6 is rotated. For rotating the shaft 6, the power transmission mechanism transmits a power from a driving member or a pulley 3 to a driven member or the shaft 6.

The pulley 3 is rotatably supported on the front housing 1 through a bearing 2. More particularly, the bearing 2 comprises an inner ring fixed to a tubular projection la of the front housing 1 and an outer ring fixed to the pulley 3.

The power transmission mechanism comprises an outer ring 5, an inner boss 7, and an elastic ring member 9. The outer ring 5 is fixed to the pulley 3 by means of three bolts 4 and has an inner circular surface 5a. The inner boss 7 is fixed to the shaft 6 by a nut 8 and has an outer circular surface 7a which is opposite to the inner circular surface 5a in a radial direction of the outer ring 5 to form a ring-shaped space therebetween. The elastic ring member 9 is placed in the ring-shaped space and circularly extends to form a ring shape. More particularly, the elastic ring member 9 is vulcanization-adhered around the outer circular surface 7a of the inner boss 7 and is press-fitted in the outer ring 5. The elastic ring member 9 is made of rubber known in the art.

For the press-fitting, a method is adopted wherein an outer diameter of the elastic ring member 9 is set to be slightly greater than an inner diameter of the outer ring 5, that is, a fitting margin is provided, and then the elastic ring member 9 is press-fitted in the outer ring 5.

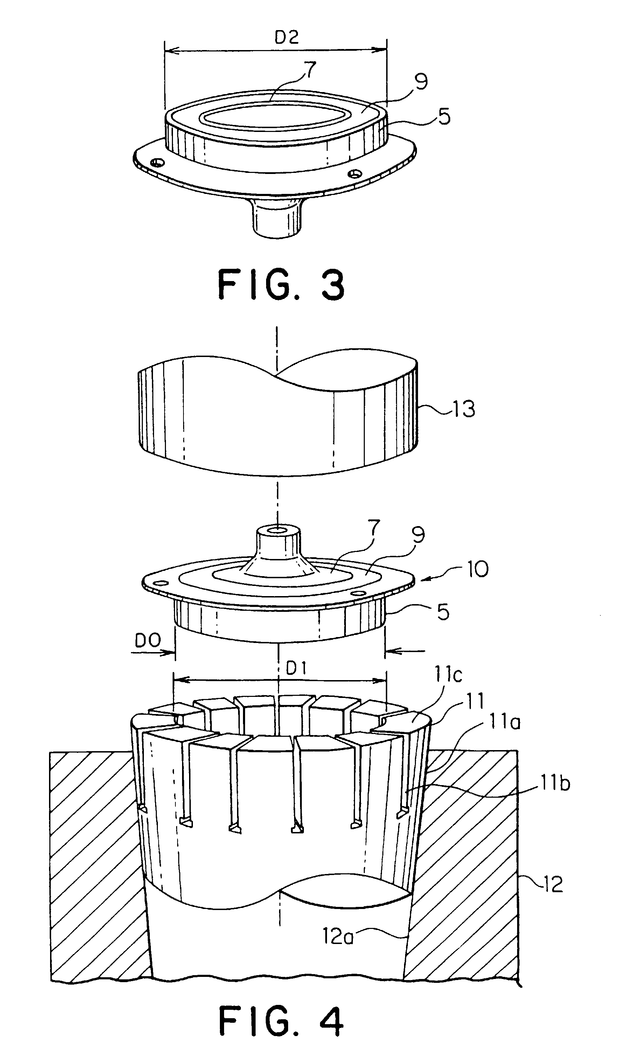

Referring to Figs. 4, the description will be made as regards another method of the press-fitting. In this method, after integral formation of the outer ring 5, the inner boss 7 and the rubber elastic ring 9, an outer diameter of the outer ring 5 is reduced by a contraction process. This method can provide uniform radial contraction margins.

Specifically, the inner boss 7 applied with an adhesive on its outer circumference and the outer ring 5 are set in a rubber vulcanization die, and then melted rubber is injected into the die so that the inner boss 7 is subjected to vulcanization adhesion. In this event, the inner circumference of the outer ring 5 is in contact with the rubber, but does not adhere thereto.

Then, using a contraction jig 11, the outer diameter of the outer ring 5 is reduced. Since a guide diameter D1 of the contraction jig 11 is set greater than an outer diameter D0 of the outer ring 5 after the vulcanization (D1>D0) to provide a proper clearance therebetween, galling between the contraction jig 11 and the outer ring 5 is not caused.

The contraction jig 11 is provided with a tapered outer circumference lla and further provided with slits llb arranged at regular intervals in a circumferential direction thereof to provide split pieces 11c. Accordingly, when a punch 13 is lowered to press the rubber assembly 10 and the contraction jig 11 into a presser jig 12 having a tapered inner circumference 12a, the split pieces 11c are forced inward to press the outer ring 5 so as to have a required diameter D2 (see Fig. 3). This causes the elastic ring member 9 to generate the uniform compressive reaction.

Following upward movement of the punch 13 after the completion of the contraction process, the contraction jig 11 supported by a spring (not shown) is also raised. In this event, since the contraction jig 11 is made of spring steel or the like, the split pieces 11c are restored to the original diameter D1. As appreciated, the contraction margin is given by D0-D2.

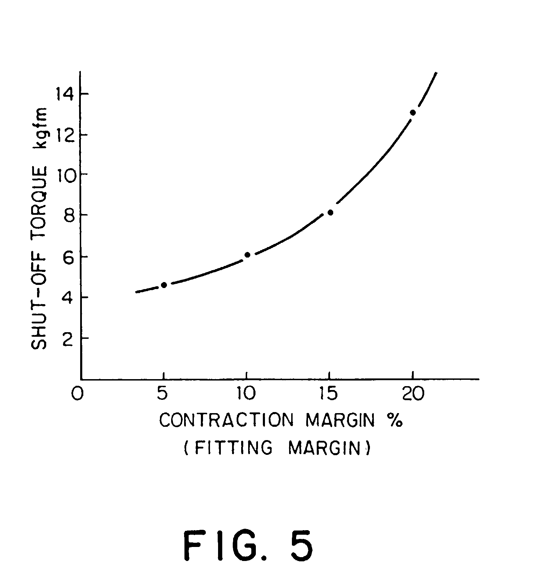

Referring to Fig. 5, the description will be directed to a relationship between the contract margin or the fitting margin and the transmission shut-off torque. When the transmission torque becomes about 6 to 7kgfm, a driving belt of the pulley 3 starts slipping. Accordingly, in this embodiment, setting the maximum shut-off torque to 6kgfm, a contact area between the outer ring 5 and the elastic ring member 9 was set and then a corresponding proper contraction or fitting margin was determined. Since the sufficient safety factor should be ensured relative to the normal load torque of the compressor, the minimum transmission torque was set to 4.5kgfm. Accordingly, the proper contraction or fitting margin was found to be 5 to 10%.

The torque of the pulley 3 is transmitted to the shaft 6 of the compressor via the outer ring 5, the elastic ring member 9 and the inner boss 7 by means of a frictional force determined by an internal compressive reaction and a friction coefficient of the elastic ring member 9. The torque fluctuation during the normal load is relaxed by means of the elastic ring member 9.

The internal compressive reaction of the elastic ring member 9 is uniform along the entire contact surface of the outer ring 5, and further, the outer ring 5 has no geometrically constrained portions. Thus, the shut-off torque can be held constant.

If the load torque of the compressor increases to approach a set value of the shut-off torque, the frictional force generated between the inner circumference of the outer ring 5 and the outer circumference of the rubber elastic ring 9 can not overcome the torque so that slips are caused. However, due to the rigidity of the elastic ring member 9, slipping and non-slipping are alternately repeated.

Then, when the compressor is locked to be unable to rotate, slips are generated between the outer ring 5 and the elastic ring member 9 so that the rubber is fused by generated frictional heat to immediately shut off the torque transmission. Therefore, damage to the driving belt of the pulley 3 is prevented.

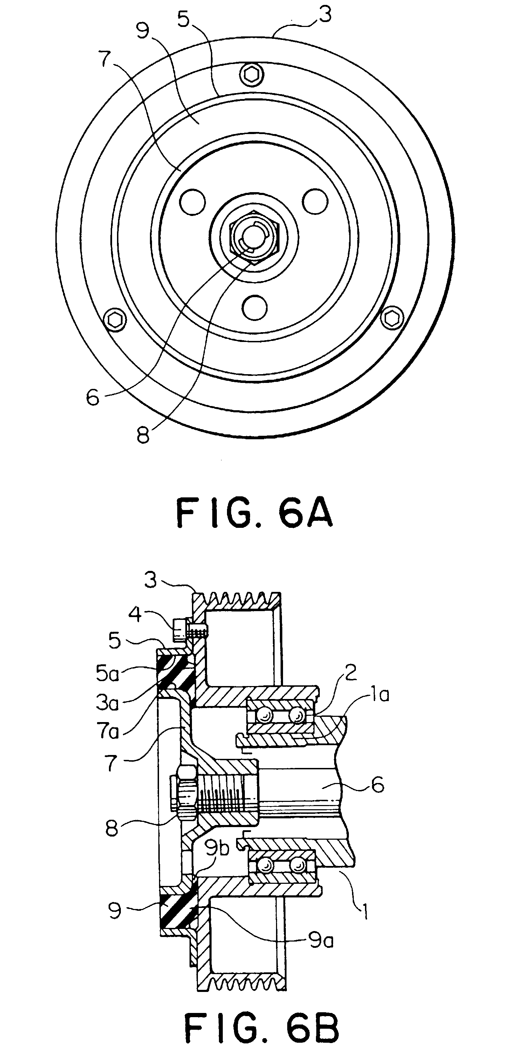

Turning to Figs 6A and 6B, the description will be made as regards a power transmission mechanism according to the second preferred embodiment of the present invention. The power transmission mechanism comprises similar parts designated by like reference numerals.

In the power transmission mechanism, the pulley 3 has an axial end 3a facing the ring-shaped space that is remained between the outer ring 5 and inner boss 7 in the radial direction. The elastic ring member 9 is in press contact with the axial end 3a of the pulley 3. In other words, the elastic ring member 9 has an axially projected portion 9a confronting the axial end 3a of the pulley 3 and has a part 9b interposed between the pulley 3 and the inner boss 7. With this structure, since the vibration and rotation run-out are absorbed, the durability is improved.

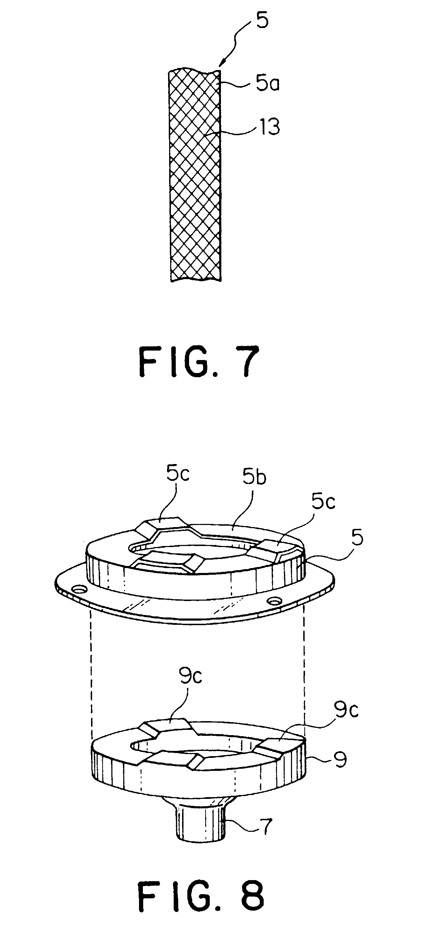

Referring to Fig. 7 together with Figs. 2A and 2B, the description will be made as regards a power transmission mechanism according to a third preferred embodiment of the present invention. The power transmission mechanism comprises similar parts designated by like reference numerals.

In the power transmission mechanism, the inner circular surface 5a of the outer ring 5 is formed with fine concave and convex portions 13 by shot blasting or knurling processing known in the art, and then are brought in press contact with the elastic ring member 9. Accordingly, the elastic ring member 9 is formed with convex portions and concave portions at an outer peripheral surface thereof. This results in cooperatively providing the fine concave/convex coupling between the outer ring 5 and the elastic ring member 9.

Accordingly, slips can be easily prevented by means of the fine concave/convex coupling. Further, when the compressor is locked to be unable to rotate, since the abrupt torque is applied to the roots of the fine rubber convex portions, the rubber convex portions are instantly sheared to shut off the torque transmission.

Referring to Fig. 8, the description will be made as regards a power transmission mechanism according to the fourth preferred embodiment of the present invention.

In the power transmission mechanism, an outer ring 5 is formed with an inward flange 5b which inwardly extends to face the above-mentioned ring-shaped space and has a plurality of ring-side engaging portions 5c. The elastic ring member 9 has a plurality of member-side engaging portions 9c at an axial end thereof. The member-side engaging portions 9c are engaged with the ring-side engaging portions 5c when the elastic ring member 9 is press-fitted into the outer ring 5. Through engagement between the engaging portions 5c and 9c, slips can be prevented more reliably. Since each of the engaging portions 5c has a hollow trapezoidal shape in section while each of the engaging portions 9c has a solid trapezoidal shape in section, the transmission shut-off torque is not increased. Specifically, the principal torque transmission is carried out between the inner surface 5a of the outer ring 5 and the outer surface of the elastic ring member 9, while small slips can be prevented between the engaging portions 5c of the outer ring 5 and the engaging portions 9c of the elastic ring member 9.

## Claims

1. A power transmission mechanism for transmitting a power between a driving member (3) and a driven member (6), comprising:
an outer ring (5) fixed to said driving member (3) and having an inner circular surface (5a);
an inner boss (7) fixed to said driven member (6) and having an outer circular surface (7a) which is opposite to said inner circular surface (5a) in a radial direction of said outer ring (5) to form a ring-shaped space therebetween; and
an elastic member (9) placed in said ring-shaped space, said elastic member (9) being compressed in said radial direction to generate a compressive reaction which makes said elastic member (9) become in press contact with said inner and said outer circular surfaces (5a, 7a),
characterized in that
said outer ring (5) and said elastic member (9) generate frictional heat therebetween when said elastic member (9) slides along said inner circular surface (5a) of said driving member (3), said frictional heat making said elastic member (9) be fused at a portion adjacent to said inner circular surface (5a) so as to shut off said power transmission.

2. A power transmission mechanism as claimed in claim 1, wherein said elastic member (9) circularly extends along said ring-shaped space to form a ring shape.

3. A power transmission mechanism as claimed in claim 1 or 2, wherein said elastic member (9) is made of rubber.

4. A power transmission mechanism as claim in one of claims 1 to 3, wherein said elastic member (9) is adhered to said outer circular surface (7a) of the inner boss (7).

5. A power transmission mechanism as claimed in one of claims 1 to 4, wherein said compressive reaction is determined to slide said elastic member (9) along said inner circular surface (5a) of said driving member (3) when said driving member (3) has a torque exceeding a set value which is set for a power transmission between said driving and said driven members (3,6).

6. A power transmission mechanism as claimed in one of claims 1 to 5, wherein said driving member (3) comprises a pulley (3) having an axial end (3a) facing said ring-shaped space, said elastic member (9) being in contact with said axial end (3a) of the pulley (3).

7. A power transmission mechanism as claimed in one of claims 1 to 6, wherein said inner circular surface (5a) of the outer ring (5) is formed with a plurality of fine concave and convex portions (13) which are engaged with said elastic member (9) in a circumferential direction of said outer ring (5).

8. A power transmission mechanism as claimed in one of claims 1 to 7, wherein said outer ring (5) includes an inward flange (5b) which inwardly extends to face said ring-shaped space and has a ring-side engaging portion (5c), said elastic member (9) having member-side engagging portion (9c) which engages with said ring-side engaging portion (5c) in a circumferential direction of said outer ring (5).

## Patentansprüche

1. Kraftübertragungsmechanismus zum Übertragen einer Kraft zwischen einem Antriebselement (3) und einem angetriebenen Element (6), mit:
einem Außenring (5), der an dem Antriebselement (3) befestigt ist und eine kreisförmige Innenoberfläche (5a) aufweist;
einem inneren Vorsprung (7), der an dem angetriebenen Element (6) befestigt ist und eine kreisförmige Außenoberfläche (7a) aufweist, die in radialer Richtung des Außenrings (5) der kreisförmigen Innenoberfläche (5a) gegenüberliegt, um dazwischen einen ringförmigen Raum zu bilden; und einem elastischen Element (9), das in dem ringförmigen Raum angeordnet ist, wobei das elastische Element (9) in der radialen Richtung komprimiert ist, um eine Kompressionsreaktion zu erzeugen, die dazu führt, daß das elastische Element (9) in Preßkontakt mit der kreisförmigen Innen- und Außenoberfläche (5a, 7a) kommt,
dadurch gekennzeichnet, daß
der Außenring (5) und das elastische Element (9) zwischen sich eine Reibungswärme erzeugen, wenn das elastische Element (9) entlang der kreisförmigen Innenoberfläche (5a) des Antriebselements (3) gleitet, wobei die Reibungswärme dazu führt, daß das elastische Element (9) in einem Abschnitt angrenzend an die kreisförmige Innenoberfläche (5a) schmilzt, so daß die Kraftübertragung abgestellt wird.

2. Kraftübertragungsmechanismus nach Anspruch 1, bei dem das elastische Element (9) sich kreisförmig entlang des ringförmigen Raumes erstreckt, um eine Ringform zu bilden.

3. Kraftübertragungsmechanismus nach Anspruch 1 oder 2, bei dem das elastische Element (9) aus Gummi gebildet ist.

4. Kraftübertragungsmechanismus nach einem der Ansprüche 1 bis 3, bei dem das elastische Element (9) an der kreisförmigen Außenoberfläche (7a) des inneren Vorsprungs (7) befestigt ist.

5. Kraftübertragungsmechanismus nach einem der Ansprüche 1 bis 4, bei dem die Kompressionsreaktion bestimmt ist, um das elastische Element (9) entlang der kreisförmigen Innenoberfläche (5a) des Antriebselementes (3) gleiten zu lassen, wenn das Antriebselement (3) ein Drehmoment aufweist, das einen eingestellten Wert übersteigt, der für eine Kraftübertragung zwischen dem Antriebselement (3) und dem angetriebenen Element (6) eingestellt ist.

6. Kraftübertragungsmechanismus nach einem der Ansprüche 1 bis 5, bei dem das Antriebselement (3) eine Riemenscheibe (3) mit einem axialen Ende (3a), das dem ringförmigen Raum zugewandt ist, aufweist, wobei das elastische Element (9) in Kontakt mit dem axialen Ende (3a) der Riemenscheibe (3) steht.

7. Kraftübertragungsmechanismus nach einem der Ansprüche 1 bis 6, bei dem die kreisförmige Innenoberfläche (5a) des Außenrings (5) mit einer Mehrzahl von feinen konkaven und konvexen Abschnitten (13) gebildet ist, die in Eingriff sind mit dem elastischen Element (9) in einer Umfangsrichtung des Außenrings (5).

8. Kraftübertragungsmechanismus nach einem der Ansprüche 1 bis 7, bei dem der Außenring (5) einen Innenflansch (5b) aufweist, der sich nach innen erstreckt, um dem ringförmigen Raum zugewandt zu sein, und einen ringseitigen Eingriffsabschnitt (5c) aufweist, wobei das elastische Element (9) einen elementseitigen Eingriffsabschnitt (9c) aufweist, der in Eingriff steht mit dem ringseitigen Eingriffsabschnitt (5c) in einer Umfangsrichtung des Außenringes (5).

## Revendications

1. Transmission de puissance destinée à transmettre une puissance entre un élément d'entraînement (3) et un élément entraîné (6), comprenant :
• un anneau extérieur (5) fixé à l'élément d'entraînement (3) et comportant une surface circulaire intérieure (5a) ;
• un moyeu intérieur (7) fixé à l'élément entraîné (6) et comportant une surface circulaire extérieure (7a) qui est opposée à la surface circulaire intérieure (5a) dans la direction radiale de l'anneau extérieur (5), de manière à constituer un espace en forme d'anneau entre les deux ;et
• un élément élastique (9) placé dans l'espace en forme d'anneau, cet élément élastique (9) étant comprimé dans la direction radiale pour générer une réaction de compression qui amène l'élément élastique (9) en contact de pression avec les surfaces circulaires intérieures et extérieures (5a, 7a),
caractérisée en ce que
l'anneau extérieur (5) et l'élément élastique (9) génèrent de la chaleur de frottement entre eux lorsque l'élément élastique (9) glisse le long de la surface circulaire intérieure (5a) de l'élément d'entraînement (3), cette chaleur de frottement faisant fondre l'élément élastique (9) dans une partie adjacente à la surface circulaire intérieure (5a), de manière à couper la transmission de puissance.

2. Transmission de puissance selon la revendication 1,
dans laquelle
l'élément élastique (9) s'étend circulairement le long de l'espace en forme d'anneau de manière à constituer une forme annulaire.

3. Transmission de puissance selon la revendication 1 ou 2,
dans laquelle
l'élément élastique (9) est réalisé en caoutchouc.

4. Transmission de puissance selon l'une quelconque des revendications 1 à 3,
dans laquelle
l'élément élastique (9) est collé à la surface circulaire extérieure (7a) du moyeu intérieur (7).

5. Transmission de puissance selon l'une quelconque des revendications 1 à 4,
dans laquelle
la réaction de compression est déterminée pour faire glisser l'élément élastique (9) le long de la surface circulaire intérieure (5a) de l'élément d'entraînement (3) lorsque cet élément d'entraînement (3) produit un couple dépassant une valeur de réglage déterminée pour une transmission de puissance entre l'élément d'entraînement (3) et l'élément entraîné (6).

6. Transmission de puissance selon l'une quelconque des revendications 1 à 5,
dans laquelle
l'élément d'entraînement (3) comprend une poulie (3) comportant une extrémité axiale (3a) venant en face de l'espace en forme d'anneau, l'élément élastique (9) étant en contact avec cette extrémité axiale (3a) de la poulie (3).

7. Transmission de puissance selon l'une quelconque des revendications 1 à 6,
dans laquelle
la surface circulaire intérieure (5a) de l'anneau extérieur (5) est munie d'un certain nombre de parties concaves et convexes fines (13) qui sont en prise avec l'élément élastique (9) dans la direction circonférentielle de l'anneau extérieur (5).

8. Transmission de puissance selon l'une quelconque des revendications 1 à 7,
dans laquelle
l'anneau extérieur (5) comprend une collerette intérieure (5b) qui s'étend vers l'intérieur pour venir en face de l'espace en forme d'anneau, et comporte une partie d'engagement (5c) du côté de l'anneau, l'élément élastique (9) comportant une partie d'engagement (9c) du côté de l'élément, qui vient en prise avec la partie d'engagement (5c) du côté de l'anneau, dans la direction circonférentielle de l'anneau extérieur (5).
